# EUROPEAN PATENT APPLICATION

(11) **EP 0 663 278 A1**
(43) Date of publication of application: **19.07.1995**
(21) Application number: 95400047.7
(22) Date of filing: 10.01.1995
(51) Int. Cl.: B29C 49/24

(54) **Composite paperboard and plastic container**

(30) Priority: 12.01.1994 US 180305
(71) Applicant: WESTVACO CORPORATION, New York New York 10171 (US)
(72) Inventor: Farrell, Robert Anthony, Silver Spring, Maryland 20905 (US); Rigby, William Roger, Newark, Delaware 19711 (US)
(74) Representative: Plaçais, Jean-Yves

(57) **Abstract**

This invention relates to composite material containers suitable for transport and storage of liquid food products, household cleaners and other fluent materials. Such structures of this type, generally, are constructed of a composite of paperboard (11) and plastic (40) and are, thus, economically manufactured and easily recyclable.

## Description

### BACKGROUND OF THE INVENTION

### Field of the Invention:

This invention relates to composite material containers suitable for transport and storage of liquid food products, household cleaners and other fluent materials. Such structures of this type, generally, are constructed of a composite of paperboard and plastic and are, thus, economically manufactured and easily recyclable.

### Description of the Related Art:

Utility for the present invention is focused upon reclosable liquid containers in consumer sizes of one to five liters such as is used for milk, fruit juice, bleach, automotive antifreeze, and household cleaning chemicals. A considerable portion of the present market demand for such containers is provided by blow molded plastic containers as are represented by those described in U. S. Patent No. 4,070,429 ('429) to A. R. Uhling, entitled "Method for Forming a Blown Plastic Container."

Blow molding is a term of art used to describe the process by which a hollow, tubular parison of hot, viscous thermoplastic polymers is extruded into a mold cavity. When sufficient parison material is in place within the closed mold cavity and both ends of the parison tube are closed, as by pinching, an inflation needle is inserted into the closed parison volume and pressurized gas is released therethrough. Expansion of the pressurized gas within the closed parison expands the hot thermoplastic walls of the closed parison against the closed mold walls, thereby, forming the desired article shape. So formed, the mold confined thermoplastic material article is chilled within the mold to solidification. Thereafter, the mold cavity is opened to release the article so formed.

Generally, this process is practiced with a monolayer thermoplastic parison but multiple layer laminations are known in the art.

Product or contents identification and information is applied after the vessel is formed. This may be by a masked exterior spray application or a printed paper label secured easily to the exterior walls. In either case, the graphics field is somewhat limited. Therefore, a more advantageous container then, would be presented if the container would employ a blow molded bottle while allowing the graphics to be more easily applied.

Also, it is known in the art to employ multi-wall containers which include an outer one-piece cylinder and a blow molded inner bottle. Exemplary to such prior art is U. S. Patent No. 2,959,812 ('812) to K. R. Allen, entitled "Multiwall Containers." However, the use of the one-piece cylinder does not allow the container to be quickly and economically manufactured in a blow molding apparatus. This is because the one-piece cylinder must be moved into the blow molding unit, centered within the blow molding unit, filled by the blow molding unit and the parison must be threaded through the length of the cylinder so as not to touch this inner surface of the cylinder which requires a relatively long period of time. Also, the one-piece cylinder cannot be easily removed, especially if the cylinder is made of metal or plastic, thus, the container cannot be easily recycled into separate plastic and paper components. Therefore, a still further advantageous container would be present if the container could be quickly manufactured and easily recycled.

Finally, it is known in the art to employ a bottle type container which is fabricated by blow molding a continuous wall liner of thermoplastic polymer internally into the interior wall surfaces of an oppositely matched pair of paperboard cladding jackets such that the paperboard cladding jackets are joined substantially edge-to-edge along the meeting seam between the cladding jackets by a continuous liner wall lap. For container stability when resting on a flat surface, at least one folded ridge is formed along the bottom panel of both jackets.

Exemplary of such prior art achieving a modicum of the success in this regard is disclosed in commonly assigned U. S. Patent No. 5,122,399 ('399) to R. A. Farrell et al., entitled "Paperboard Bottle." While this paperboard bottle can be quickly manufactured, it is made up, of necessity, of paperboard which must enclose substantially the entire bottle. Therefore, a still more advantageous composite container, would be presented if such amounts of paperboard were reduced.

It is apparent from the above that there exists a need in the art for a composite bottle container which is constructed of paperboard and plastic, and which can be quickly and inexpensively manufactured but, wherein the paperboard portion does not substantially enclose the entire plastic bottle portion. It is a purpose of this invention to fulfill this and other needs in the art in a manner more apparent to the skilled artisan once given the following disclosure.

### SUMMARY OF THE INVENTION

Generally speaking, this invention fulfills these needs by providing a method for continuously forming a composite fluid container having a partial paperboard exterior and a blow molded polymer interior lining, wherein said method is comprised of the steps of: erecting at least two sections of said paperboard exterior such that each of said sections includes a paperboard blank having at least two fold-formed planar facets; forming a jacket from said at least two sections; forming said interior lining in a blow molding apparatus by blow molding a polymer material substantially within said jacket such that a portion of said interior lining is bonded intimately and continuously with said jacket such that an upper and lower portion of said interior lining extend substantially away from said jacket; removing said jacket and interior lining from said blow molding apparatus; and, trimming, if necessary, said interior lining to produce said composite fluid container.

In certain preferred embodiments the paperboard blanks are used to form the structural paperboard jacket by edge-to-edge seamed joints along the paperboard blanks.

In another preferred embodiment, the composite paperboard and plastic bottle allows the bottle to be quickly manufactured and increases the recyclability of the bottle because the paperboard can be more easily removed from the polymer lining.

The preferred composite paperboard and plastic bottle, according to this invention, offers the following advantages: lightness in weight; ease of assembly; excellent recyclability characteristics; good stability; good durability; excellent economy; and high strength for safety. In fact, in many of the preferred embodiments, these factors of ease of assembly, recyclability, and economy are optimized to an extent that is considerably higher than heretofore achieved in prior, known composite containers.

### A BRIEF DESCRIPTION OF THE DRAWINGS

The above and other features of the present invention, which will become more apparent as the description proceeds, are best understood by considering the following detailed description in conjunction with the accompanying drawings, wherein like characters represent like parts throughout the several views and in which:
FIGURE 1 is a pictorial view of a cut, paperboard jacket blank;
FIGURE 2 is an open split blow mold unit, according to the present invention, charged with a pair of jacket blanks;
FIGURE 3 is an open, split blow mold unit, according to the present invention, charged with a pair of jacket blanks and an extruded parison;
FIGURE 4 sectionally illustrates a blow molding unit, according to the present invention, in the closed position prior to parison inflation;
FIGURE 5 sectionally illustrates a blow molding unit, according to the present invention, in the closed position after parison inflation;
FIGURE 6 sectionally illustrates a blow molding unit, according to the present invention, in the open position after parison inflation;
FIGURE 7 is a pictorial view of a composite paperboard and plastic bottle, according to the present invention;
FIGURE 8 is an elevational view of an integrated production unit, according to the present invention;
FIGURE 9 is an enlarged elevated detail of an integrated production unit, according to the present invention;

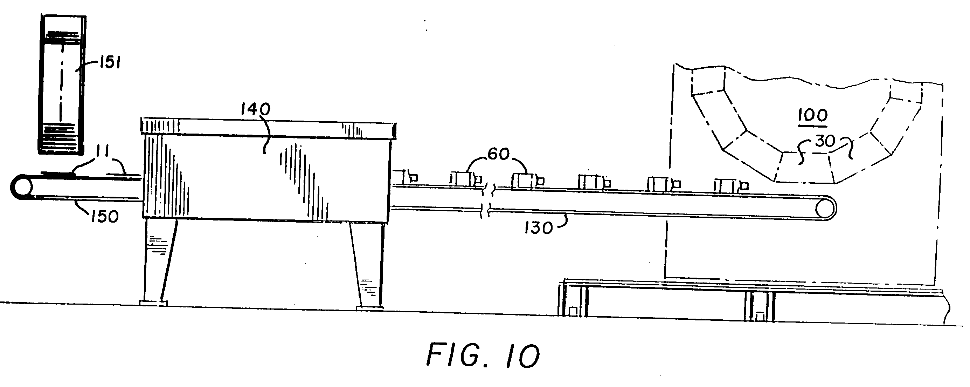

FIGURE 10 is an enlarged elevated detail of an integrated production unit, according to the present invention; and

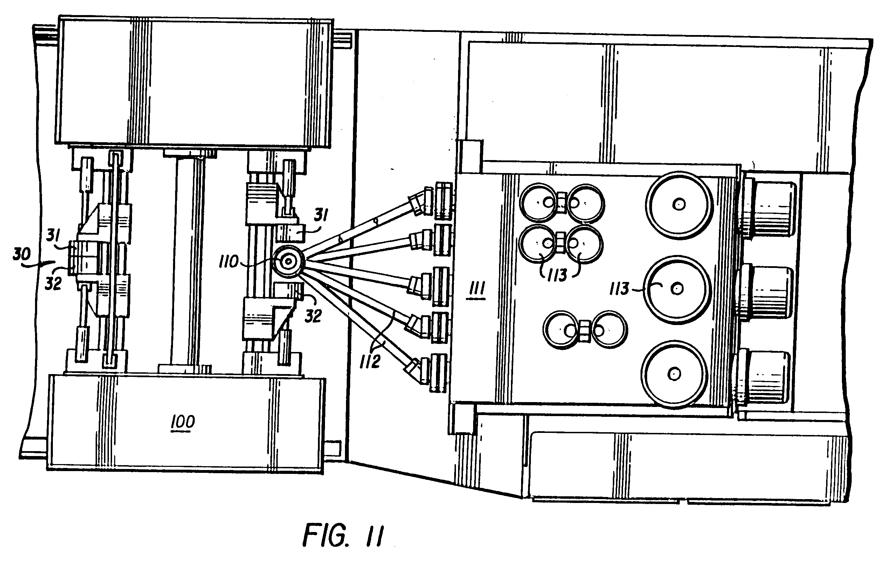

FIGURE 11 is an enlarged plan view of the present invention, using a rotary blow molding unit.

### DETAILED DESCRIPTION OF THE INVENTION

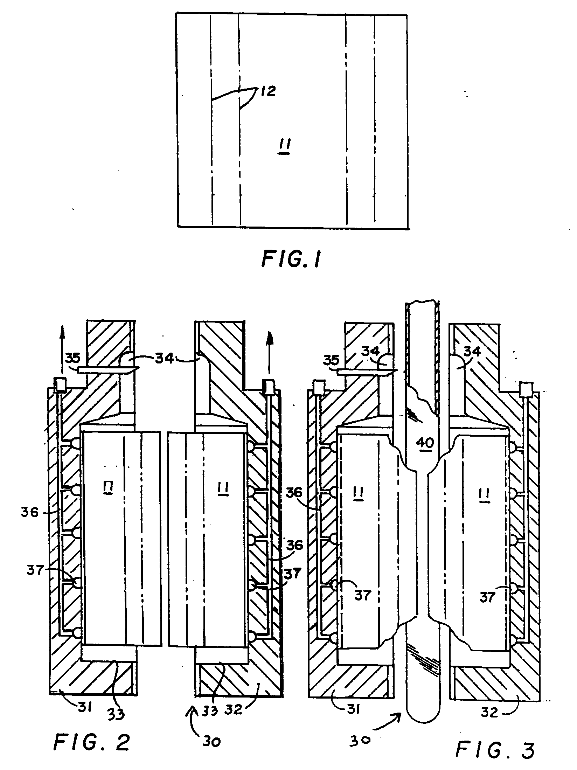

With reference first to Figure 1, there is illustrated paperboard blank 11. Blank 11 includes, in part, conventional score lines 12. It is to be understood that while blank 11, preferably, shows two score lines 12, the minimum number of score lines per each blank 11 is one.

The basic substrate material for blank 11 is a paperboard (p) which may range in thickness (P) from 0.007 to 0.035 inches. The paperboard stock may be pretreated with an extruded curtain coat (t) of a selected polymer as set forth in commonly assigned U. S. Patent No. 5,009,939 ('939) to B. A. Goldberg entitled "Composite Paperboard and Polymer Package." If the final blank product is to be decorated with graphics, wound reels of pretreated paperboard (not illustrated) are processed through a printing press which simultaneously applies positional registration indicia with the graphic decoration.

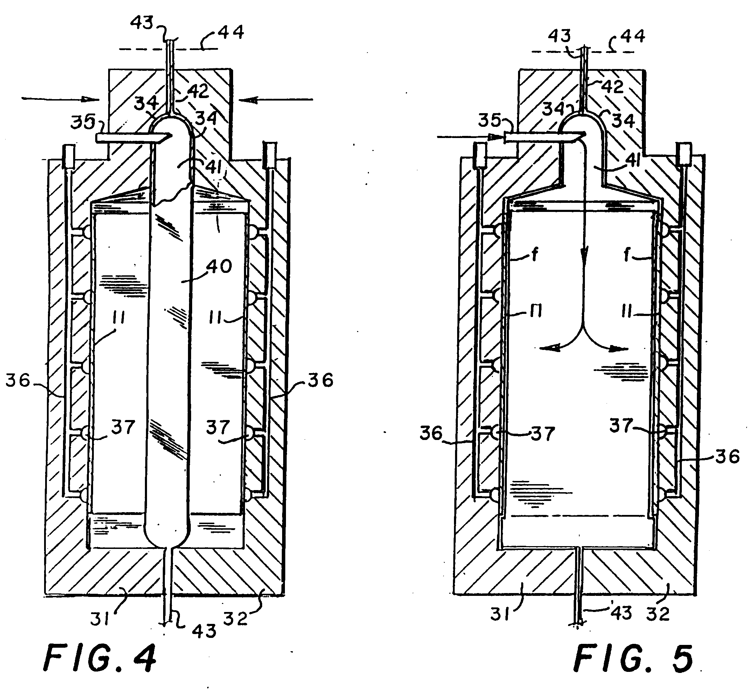

Consistent with a state-of-the-art blow molding process, Figures 2-6 illustrate a symmetrically split mold 30 having mold halves 31 and 32. These mold halves are mechanically linked to reciprocate from an open position represented by Figures 2, 3 and 6 to a closed position represented by Figures 4 and 5. Characteristic of conventional blow molds, symmetric cavities 33, configured to the external surface dimensions and shapes of a finished product half, are provided in each mold half. At one end of the mold halves, the product cavities open into a plenum section 34 configured to confine an inflation bulb. Mold half 31 is also provided with a hollow inflation needle 35.

Distinctive of the present invention are vacuum conduits 36 in both halves 31 and 32 with orifices 37 opening into cavities 33. Vacuum system 36 secures the position of an erected bottle blank 11 in each mold cavity prior to film (f) application with bottle blanks 11 being placed within the respective cavities while mold unit 30 is open, as represented by Figure 2.

Also, while mold unit 30 is open, mold unit 30 is moved into a position surrounding a tubular length of extruded film material, known in the art as parison 40, with parison 40 located between the open mold halves, as shown in Figure 3.

With bottle blanks 11 and parison 40 in place, the mold halves are closed, as represented by Figure 4, thereby, sealing the upper extrusion head (not shown) end of parison 40 along a fused seam 42. The lower or distal end of parison 40 is sealed along seam 43 by the same sealing function as discussed with respect to the previous mold cycle. The two seam areas 42 and 43 are then divided by a severance along the parison cut line 44 at the conclusion of the cycle.

Closure of the mold heads 31 and 32 also pushes the inflation needle 35 through the parison wall film of the inflation bulb 41 and penetration of needle 35 is aided by a conventional vacuum to draw parison 40 over needle 35. In this condition, a charge of compressed air or other gas, in the range of 5 to 90 p.s.i., is released through the inflation needle into the inflation bulb 41 and, consequently, into the closed interior of parison 40. The pressure in the parison 40 expands the hot, malleable polymer tube tightly against the mold cavity walls and the inner surfaces of blank 11 to create an inner lining having a film thickness (F), as shown by Figure 5.

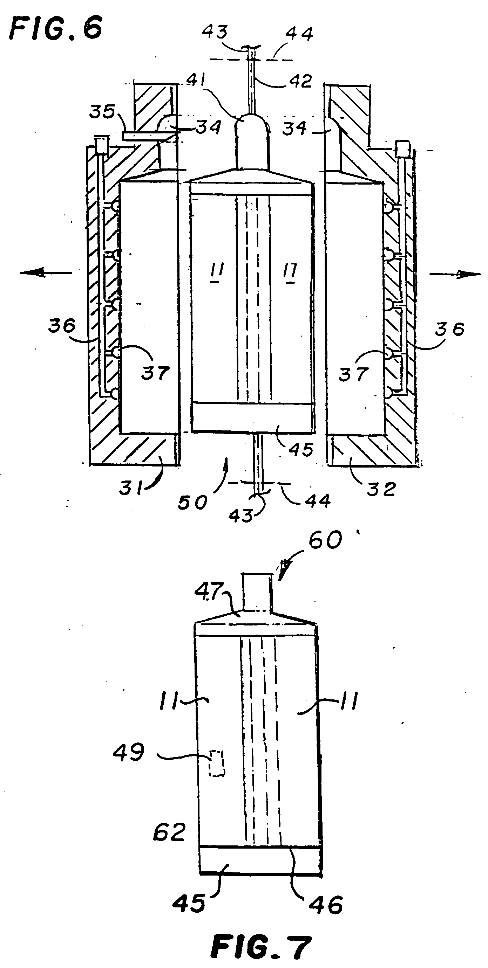

Following a brief chilling interval, the two mold halves 31 and 32 are separated, as represented by Figure 6, leaving the two paper blanks 11 securely bonded to inflated parison 40 as a singular unit 50. This unit 50 is then separated from the extruded parison by a cut 44 between the heat sealed areas 42 and 43. At this point in the process, unit 50 represents two paperboard blanks 11 joined by a continuous, unlaminated band 45 of film (f) which includes the inflation bulb 41 such that blanks 11 are securely bonded to inflated parison 40.

Following the severance of parison 40, the segregated unit 50 is placed upon a conventional anvil (not shown) of a conventional cutting die (not shown). Unit 50 is trimmed, according to conventional practices such as those set forth, in the ('939) patent, such that a finished bottle 60, as shown in Figure 7, is produced. Also, as shown in Figure 7, finished composite paperboard and plastic bottle 60 includes bottle blanks 11, polymer inner lining 46, exposed upper area 47, and exposed lower area 45. The term "exposed" refers to the fact the board blanks 11 cover a portion of bottle 60, i.e., an area such that upper area 47 and lower area 45 are left uncovered by blanks 11. Finally, as can be seen in Figure 7, blanks 11 are adhesively attached along seam 62 by a conventional adhesive. It is to be understood that another seam 62 is located on the other side of bottle 60 so that, preferably two adhesive seams are used to retain blanks 11 against inner lining 46. Also, the upper area 47 of bottle 60 may be molded by conventional techniques to form a neck which can accept a conventional screw-on or snap-on closure. Preferably, the distribution of polymer thickness gives the neck and upper area 47 a thickness of 30-80 mil which can support the closure and a top load strength for stacking. The thickness is reduced to 5-20 mil through a centered portion of bottle 60 in the area under blank 11. The lower area 45 is 30-60 mils thick to provide top load and input strength.

Blanks 11 are bonded to lining 46 through patterns 49 of weak and strong bonding. Two methods of obtaining patterns of bonding are a pattern application of a heat-activated adhesive material such as an ethylene vinyl acetate latex onto blanks 11 or a coextruded abhesive polymer layer such as Bynel combined with a patterned application onto blanks 11 to prevent bonding. The polymer material used in seams 62 is, preferable, a polyolefin such as high density polyethylene, which may be pigmented to provide color and opacity.

When the intended use of bottles 60 is for asceptic packaging, parison 40 may be inflated with a biologically sterile gas and the needle aperture in the inflation bulb 41 sealed upon mold injection. Such an internally sterile and gas tight unit 50 is shipped and stored in this condition until the trimming, filling, and sealing steps are completed in a sterile environment.

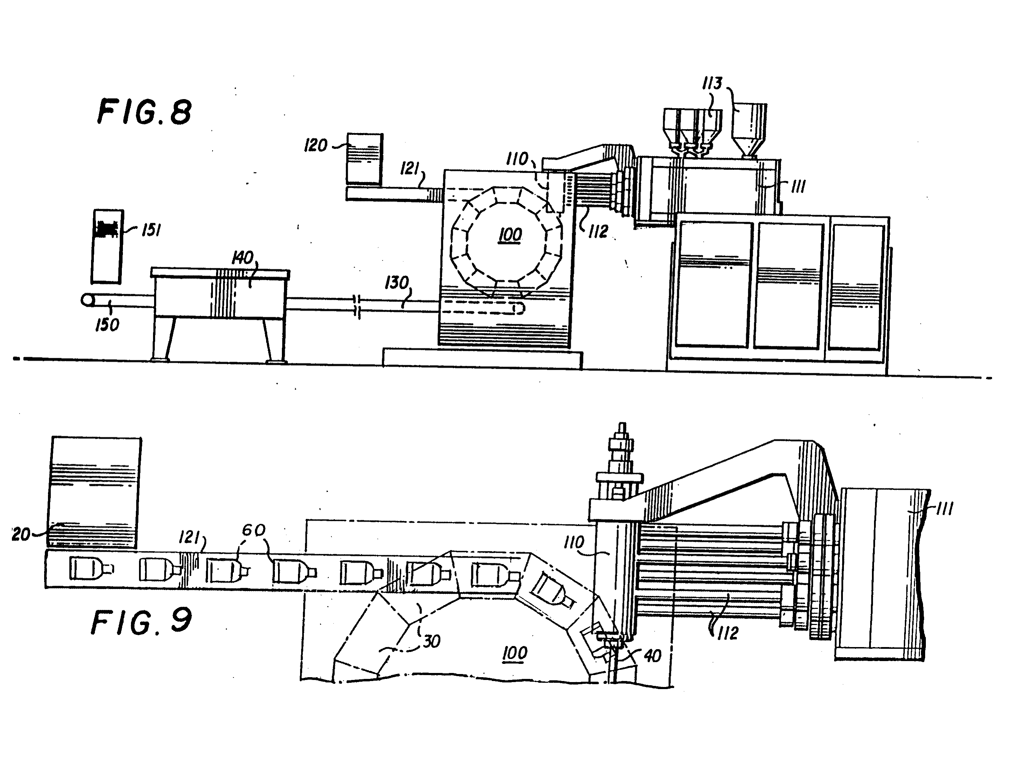

Heretofore has been described the basic invention article and process by which bottle 60 is made. Mass production of the article and the process requires a coordinated integration of several machines and art practices, each of which have achieved independent status in the prior art. The elevational layout of Figure 8 focuses upon a rotary blow molding machine 100 served by a coextrusion parison head 110. The coextrusion head 110 is supplied by a plurality of unitized resin extruders 111 connected by individual resin flow tubes 112. Feed hoppers 113 supply a solid resin bead to the respective compartments of extruders 111.

Blanks 11 are loaded into a supply magazine for dispensation to a transfer mechanism 121 which inserts opposing pairs of blanks 11 into the open mold halves 31 and 32 of each split mold unit 30. These blanks 11 are held in position within the mold cavity by a vacuum system 36, described previously, until rotary advancement of the mold wheel achieves alignment with parison 40 whereupon the mold halves close and parison 40 is inflated.

After an appropriate chilling interval, mold units 30 are opened at a rotary release station and the integrated parison and blank units 50 are received by a second transfer mechanism 130. Trim unit 140 at the receiving end of transfer mechanism 130 contains a conventional cutting die (not shown).

Although the extruded film (f) has been generally described as the homogenous polymer material, which it may be, it should be understood that the invention is not so limited. The melted polymer extrusion art is capable of extruding multiple layers of diverse polymers in a single parison flow stream. Consequently, film (f) composites may be designed to include several different compound layers, each selected on the basis of maximum barrier properties for a specific gas or combination of gases.

Once given the above disclosure, many other features, modifications or improvements will become more apparent to the skilled artisan. Such features, modifications or improvements are therefore, considered to be a part of this invention, the scope of which is to be determined by the following claims.

## Claims

1. A method for continuously forming a composite fluid container having a partial paperboard exterior and a blow molded polymer interior lining, wherein said method is comprised of the steps of:
erecting at least two sections of said paperboard exterior such that each of said sections includes a paperboard blank having at least two fold-formed planar facets;
forming a jacket from said at least two sections;
forming said interior lining in a blow molding apparatus by blow molding a polymer material substantially within said jacket such that a portion of said interior lining is bonded intimately and continuously with said jacket and an upper and a lower portion of said interior lining extend substantially away from said jacket;
removing said jacket and interior lining from said blow molding apparatus; and,
trimming, if necessary, said interior lining to produce said composite fluid container.

2. The method, as in Claim 1, wherein said erecting step is further comprised of the steps of:
placing each of said at least two sections in a respective blow mold cavity;
retaining each of said sections in said cavity by a vacuum means; and
contacting each of said at least two sections along a seam located between said sections.

3. The method, as in Claim 1, wherein said step of forming said jacket is further comprised of the step of:
adhering said at least two sections to each other substantially along said seam.

4. The method, as in Claim 1, wherein said step of forming said interior lining is further comprised of the steps of:
forming a parison of said polymer material;
placing said parison adjacent to said jacket; and
introducing a gas into said parison such that said parison expands and intimately contacts said jacket.

5. The method, as in Claim 1, wherein said erecting step is further comprised of the step of:
coating said at least two sections with an adhesive.

6. The method, as in Claim 5, wherein said adhesive is further comprised of:
ethylene vinyl acetate latex.

7. The method, as in Claim 1, wherein said erecting step is further comprised of the step of:
coating said at least two sections with an abhesive.

8. The method, as in Claim 7, wherein said abhesive is further comprised of:
Bynel.

9. The method, as in Claim 3, wherein said step of adhering is further comprised of the step of:
adhering said at least two sections with a polyolefin.

10. The method, as in Claim 9, wherein said polyolefin is further comprised of:
a high density polyethylene.

11. The method, as in Claim 5, wherein said coating step is further comprised of the step of:
coating said at least two sections in a predetermined pattern such that adherence is achieved along said predetermined pattern.

12. The method, as in Claim 7, wherein said coating step is further comprised of the step of:
coating said at least two sections in a predetermined pattern such that adherence is substantially avoided along said predetermined pattern.
